# EUROPÄISCHE PATENTSCHRIFT

(11) **EP 2 762 429 B1**
(45) Veröffentlichungstag und Bekanntmachung des Hinweises auf die Patenterteilung: **21.06.2017**
(21) Anmeldenummer: 14151075.0
(22) Anmeldetag: 14.01.2014
(51) Int. Cl.: B65G 57/24, B65G 61/00

(54) **Jalousieverschluss und hiermit ausgestatteter Palettier- oder Jalousiekopf zum Umgang mit Artikeln**
Blind closure and palletiser or blind head equipped with same for handling items
Fermeture à jalousie et tête de palettisation ou à jalousie équipée de celle-ci pour la gestion d'articles

(30) Priorität: 05.02.2013 DE 102013101119
(43) Veröffentlichungstag der Anmeldung: 06.08.2014
(73) Patentinhaber: KRONES Aktiengesellschaft, 93073 Neutraubling (DE)
(72) Erfinder: Osterhammer, Martin, 93073 Neutraubling (DE); Schweighofer, Georg, 93073 Neutraubling (DE); Beer, Erhard, 93073 Neutraubling (DE)
(74) Vertreter: Benninger, Johannes

(56) Entgegenhaltungen:
- EP-A1- 1 384 695
- EP-A2- 0 141 805
- EP-A2- 0 195 241
- EP-A2- 0 293 625
- WO-A1-2007/062778
- DE-A1- 4 424 287
- DE-A1- 19 915 376
- US-A1- 2005 265 817

## Beschreibung

Die vorliegende Erfindung betrifft einen Palettier- und Jalousiekopf mit einem Jalousieverschluss gemäß dem Oberbegriff des Anspruchs 1.

Zum Umgang mit einzelnen oder mehreren, beispielsweise zu Artikellagen gruppiert, relativ zueinander angeordneten Artikeln, die beispielsweise zu einem Stapel aufzustapeln oder von einem Stapel zu entstapeln sein können, wie dies beispielsweise beim Palettieren oder Entpalettieren der Fall sein kann, sind in der Verpackungstechnik so genannte Palettierköpfe bekannt.

Ein Palettierkopf umfasst im Wesentlichen einen Tragrahmen mit:
- zwei gegenüberliegenden Schmalseiten,
- zwei die gegenüberliegenden Schmalseiten beidseitig miteinander verbindenden, gegenüberliegende Stirnseiten,
- einer die beiden gegenüberliegenden Schmalseiten und die beiden gegenüberliegende Stirnseiten miteinander verbindenden Oberseite, an der oder an wenigstens einer der beiden Schmalseiten eine Verbringungsvorrichtung, beispielsweise mindestens ein an einem horizontalen Querträger verfahrbarer Schlitten oder ein Hubwerk oder ein mehrachsig beweglicher Roboterarm, um nur einige denkbare Ausgestaltungen zu nennen, angreift, mit welcher der Palettierkopf von einer Beladeposition in eine Entladeposition bewegt werden kann,
- einer ebenfalls die beiden gegenüberliegenden Schmalseiten und die beiden gegenüberliegende Stirnseiten miteinander verbindenden Unterseite mit einer vermittels einer oder zweier an den Schmalseiten beweglich geführter Jalousien eines Jalousieverschlusses verschließ bzw. abdeckbaren Be- und Entladeöffnung, die in geschlossenem Zustand von der einen Jalousie vollständig oder von den zwei gegenläufig beweglichen Jalousien beispielsweise jeweils zur Hälfte abgedeckt ist und die in geöffnetem Zustand frei liegt,
- einem zwischen der Ober- und der Unterseite, den beiden Schmalseiten und den beiden Stirnseiten beherbergten und durch die Be- und Entladeöffnung zugänglichen Aufnahmeraum für einen oder mehrere Artikel oder eine oder mehrere Artikellagen, wobei Artikel oder Artikellagen durch die Be- und Entladeöffnung in den Aufnahmeraum ein- und wieder ausgebracht werden,
sowie einen Jalousieverschluss mit
- mindestens einem Paar an den beiden gegenüberliegenden Schmalseiten beidseits der an der Unterseite befindlichen Be- und Entladeöffnung voneinander beabstandet angeordnete Führungseinrichtungen zur beweglichen Führung einer oder zweier Jalousien an den beiden Schmalseiten, wobei einer Jalousie ein Paar einander gegenüberliegend voneinander beabstandet angeordnete Führungseinrichtungen zugeordnet ist,
- einer oder zwei Jalousien bestehend aus mehreren parallel zueinander angeordneten Lamellen, die jeweils mit ihren Enden in an den beiden gegenüberliegenden Schmalseiten angeordnete Führungseinrichtungen eingehängt bzw. mit diesen verbunden und entlang einer durch die Führungseinrichtungen vorgegebenen Führungsbahn zwischen zwei dem geschlossenen und dem geöffneten Zustand der Be- und Entladeöffnung entsprechenden Stellungen, einer Offenstellung, bei dem die Be- und Entladeöffnung frei durchgängig ist, und einer Schließstellung, bei der die Be- und Entladeöffnung durch die eine oder die zwei gegenläufigen Jalousien geschlossen ist, beweglich sind, wobei in der Schließstellung in den Aufnahmeraum eingebrachte Artikel oder Artikellagen von dem einen oder zwei gegenläufigen, in der Schließstellung beispielsweise in der Mitte der Be- und Entladeöffnung aneinander anstoßenden Jalousien getragen werden,
   und
- mindestens eine auf den wenigstens einen Jalousieverschluss einwirkenden, beispielsweise elektromotorisch oder pneumatisch oder via der Verbringungsvorrichtung antreib- oder betätigbare Betätigungseinrichtung zur Bewegung der mindestens einen Jalousie des Jalousieverschlusses von deren Offenstellung in deren Schließstellung und umgekehrt.

Neben der beschriebenen Ausgestaltung eines Palettierkopfs ist eine nachfolgend als Jalousiekopf bezeichnete Ausgestaltung bekannt. Ein grundsätzlich gleich wie ein Palettierkopf aufgebauter Jalousiekopf unterscheidet sich dabei von einem Palettierkopf dadurch, dass ein Jalousiekopf im Gegensatz zu einem Palettierkopf anstelle einer gemeinsamen Be- und Entladeöffnung eine an seiner Unterseite angeordnete, vermittels einer oder zweier gegenläufiger Jalousien eines Jalousieverschlusses verschließbare Entladeöffnung sowie eine an zumindest einer seiner Stirnseiten angeordnete Beladeöffnung aufweist. Der Aufbau und die Anordnung des Jalousieverschlusses an der bei einem Jalousiekopf lediglich als Entladeöffnung dienenden Öffnung an der Unterseite entspricht dabei grundsätzlich dem eines Palettierkopfs. Die Steuerung des Öffnens und Schließens dieser Öffnung vermittels des Jalousieverschlusses hingegen ist unterschiedlich, da bei einem Palettierkopf die Öffnung an der Unterseite sowohl zum Beladen, als auch zum Entladen offen sein muss. Bei einem Jalousiekopf hingegen werden Artikel oder Artikellagen in der Beladeposition des Jalousiekopfs in Schließstellung des Jalousieverschlusses durch die Beladeöffnung in den Aufnahmeraum eingebracht, wobei sie über die geschlossene eine oder zwei gegenläufige Jalousien des Jalousieverschlusses geschoben werden, und in der Entladeposition des Jalousiekopfs durch die Entladeöffnung wieder aus diesem ausgebracht, wobei die eine oder zwei gegenläufige Jalousien des Jalousieverschlusses unter dem Artikel oder der Artikellage weggezogen werden.

An Palettier- und Jalousieköpfe werden eine Vielzahl teils einander entgegenstehender Anforderungen gestellt, denen versucht wird durch unterschiedliche Lösungsansätze beizukommen, wie nachfolgend beschrieben. Dabei wird der Einfachheit halber im Nachfolgenden nicht mehr zwischen Artikeln und Artikellagen unterschieden, da dem Umgang mit einem oder mehreren Artikeln und dem Umgang mit einer oder mehreren Artikellagen vermittels eines Palettier- oder Jalousiekopfs grundsätzlich die selben Anforderungen zu Grunde liegen. Dabei handelt es sich im Wesentlichen um folgende Anforderungen:

Zunächst sind zum einwandfreien Be- und Entladen in den jeweiligen Schließ- und Offenstellungen des einen oder der zwei Jalousien eines Jalousieverschlusses eines Palettier- oder Jalousiekopfs zumindest während des Beladens in der Beladeposition und während des Entladens in der Entladeposition frei durchgängige Be- und Entladeöffnungen sicher zu stellen, wobei bei einem Jalousiekopf während des Beladens die Entladeöffnung verschlossen sein muss und beim Entladen die Beladeöffnung verschlossen sein darf.

Um ein störungsfreies Be- und Entladen eines Palettier- oder Jalousiekopfs zu gewährleisten, ist darüber hinaus eine geringe Reibung zwischen den Lamellen der Jalousie des Jalousieverschlusses und den darauf abgelegten Artikeln erforderlich, so dass bei einem Palettierkopf beim Schließen der Jalousie des Jalousieverschlusses diese leicht unter den oder die Artikel fahren kann oder bei einem Jalousiekopf in der Schließstellung der Jalousie des Jalousieverschlusses der oder die Artikel leicht durch die Beladeöffnung hindurch in einer gewünschten Position, Lage sowie gegebenenfalls Anordnung auf die Jalousie aufgeschoben werden können, und zum Entladen des Palettier- oder Jalousiekopfs die Jalousie möglichst ohne diese Position, Lage sowie gegebenenfalls Anordnung des oder der Artikel innerhalb des Jalousiekopfs zu verändern aus dessen Schließstellung in die Offenstellung unter dem oder den Artikeln weggezogen werden kann, um die Öffnung an der Unterseite frei zu geben und durch Anheben des Palettier- oder Jalousiekopfs diesen zu entladen.

Um ein störungsfreies Be- und Entladen eines Palettier- oder Jalousiekopfs zu gewährleisten, ist außerdem ein Verhaken zwischen den Artikeln und den Lamellen der Jalousie des Jalousieverschlusses bei deren Relativbewegung zueinander auszuschließen, sowohl während des Unterfahrens von Artikeln durch die Jalousie bei einem Palettierkopf, als auch bei einem Jalousiekopf während des Einbringens von Artikeln durch die seitliche Beladeöffnung in den Aufnahmeraum, wobei die Artikel über die in Schließstellung befindliche Jalousie des Jalousieverschlusses geschoben werden, als auch während des Entladens des Palettier- oder Jalousiekopfs, wobei die Jalousie des Jalousieverschlusses unter den in den Aufnahmeraum eingebrachten Artikeln weggezogen wird. Dabei sind das maximale Gewicht der von einer Jalousie eines Jalousieverschlusses tragbaren Artikel und die maximale Breite einer Jalousie und damit der Be- und Entladeöffnungen von Palettier- oder Jalousieköpfen durch die maximale Durchbiegung der benachbarten Lamellen, bei welcher Durchbiegung gerade noch kein Verhaken zwischen Artikeln und Lamellen auftritt, beschränkt.

Sowohl um möglichst kleine Arbeitsräume beim Umgang mit Artikeln nutzen zu können, als auch um hohen Arbeitsplatzsicherheitsbedürfnissen gerecht zu werden, darf ein Palettier- oder Jalousiekopf die Fläche seiner Öffnung an der Unterseite so wenig wie möglich überragen.

Die genannten Anforderungen sind dabei unabhängig davon, ob der Jalousieverschluss eines Palettier- oder Jalousiekopfs einen oder zwei gegenläufige Jalousien aufweist.

Zur Verminderung der Reibung zwischen Artikeln und Jalousie ist bekannt, die Lamellen als beidseitig an den Führungseinrichtungen drehbar angeordnete Rundstäbe auszuführen. Nachteilig hieran ist das geringe der Durchbiegung entgegenwirkende Flächenträgheitsmoment der einzelnen Rundstäbe.

Zur Steigerung des maximalen Artikelgewichts und der maximalen Breite der Jalousie des Jalousieverschlusses und damit der Be- und Entladeöffnungen eines Palettier- oder Jalousiekopfs ist bekannt, die Lamellen als rechteckige Profilstäbe auszuführen. Nachteilig hieran ist, die einerseits im Vergleich zu als Rollen wirkenden, drehbar an den Führungseinrichtungen gelagerten Rundstäben erhöhte Reibung zwischen den Lamellen und den Artikeln und andererseits die aufgrund des mathematischen Zusammenhangs zwischen der im Vergleich zum Durchmesser von Rundstäben nur sehr begrenzt veränderbaren Höhe von Profilstäben, der maximal möglichen Länge von Lamellen bildenden Profilstäben in durch die Führungseinrichtungen vorgegebener Bewegungsrichtung der Jalousie von deren Offenstellung in deren Schließstellung und umgekehrt und dem für die Durchbiegung maßgeblichen Flächenträgheitsmoment nur bedingt verringerbaren bzw. in Schach zu haltenden Durchbiegung der einzelnen Lamellen.

Durch DE 10 2009 058 785 A1 ist ein Palettierkopf zum Umgang mit Artikeln während des Depalettierens oder Entladens von Containern bekannt, der eine Be- und Entladeöffnung an seiner Unterseite aufweist. Diese Be- und Entladeöffnung ist mit einem Jalousieverschluss verschließbar, der eine einseitig horizontal beweglich angeordnete Jalousie aufweist. Um beim Beladen die Jalousie des Jalousieverschlusses unter einen beispielsweise auf einem Stapel zuoberst aufliegenden Artikel oder eine Artikellage bewegen zu können, ist an der in Bewegungsrichtung der Jalousie beim Schließen der Be- und Entladeöffnung vorderen Kante der Jalousie eine auch als Friktionselement bezeichenbare Aufwälzvorrichtung, beispielsweise in Form einer sich rückwärts drehenden Rolle oder Walze mit an ihrer Oberfläche hohem Reibungskoeffizienten angeordnet, welche durch die Reibung zwischen ihr und einem Artikel diesen anhebt, wenn beim Schließen der Be- und Entladeöffnung die Jalousie mit ihrer Vorderkante gegen den Artikel läuft. Durch das Anheben kann die der Aufwälzvorrichtung nachfolgende Partie der Jalousie unterfahren, so dass der Artikel auf die Jalousie befördert wird. Neben der Aufwälzvorrichtung umfasst die Jalousie als Rollen wirkende Rundstäbe, die mit parallelen Zylinderachsen nebeneinander angeordnet sind. Die Rundstäbe sind jeweils an seitlichen Führungseinrichtungen um deren Zylinderachsen drehbar angeordnet. Die Führungseinrichtungen bestehen aus Führungsschienen, in denen Rollenketten verlaufen, in Verlängerung zumindest eines Teils deren Bolzen die Rundstäbe jeweils drehbar gelagert sind.

Durch EP 2 316 762 A1 ist ein Palettierkopf mit einer seitlichen Beladeöffnung an dessen Stirnseite und einer Entladeöffnung an dessen Unterseite bekannt. Die Entladeöffnung ist mittels eines Jalousieverschlusses mit einer einseitig horizontal beweglich angeordneten Jalousie verschließbar. Über ein in seiner Länge variables Förderband werden die Artikel in der Beladeposition bei in Offenstellung befindlicher Jalousie durch die seitliche Beladeöffnung in den Palettierkopf eingebracht. In der Beladeposition befinden sich die Oberfläche der Jalousie und die die Artikel tragende Oberfläche des Förderbandes innerhalb einer Ebene. Ein Übergang zwischen der Oberfläche der Jalousie und dem dieser zugewandten Ende des Förderbandes ist durch eine Übergangsschiene eingeebnet. Synchron mit der Bewegung der Jalousie von der Offenstellung in die Schließstellung zieht sich das Förderband zurück, so dass durch die Reibung zwischen den Artikeln und dem Förderband die Artikel vom Förderband über die Übergangsschiene auf die Jalousie geschoben werden. Die Jalousie besteht aus durch Profilstäbe mit rechteckigem Querschnitt gebildeten Lamellen, die an seitlich der Entladeöffnung verlaufenden Führungseinrichtungen angeordnet sind. Die Führungseinrichtungen umfassen über Zahnräder angetriebene Rollenketten, welche die Lamellen seitlich der Entladeöffnung miteinander verbinden.

Durch WO 2007/131668 A1 ist ein Palettierkopf bekannt, der anstelle eines Jalousieverschlusses einen durch zwei gegenläufig beweglich angeordnete Platten gebildeten Tragboden aufweist. Zum Umgang mit Artikeln ist vorgesehen, diese reibschlüssig anzuheben und durch den durch die zwei gegenläufig beweglich angeordneten Platten gebildeten Tragboden zu unterfahren und anschließend hierauf abgestellt umzusetzen. Zum Entladen fahren die beiden Platten seitlich zurück, wobei die Artikel von Abstreifleisten von den Platten abgestreift werden. Dadurch wird zwar ein Verhaken der Artikel beim Be- und Entladen wirkungsvoll verhindert, nachteilig hieran ist jedoch der im Vergleich zu einem Jalousieverschluss große benötigte Arbeitsraum durch die in Offenstellung seitlich abstehenden Platten. Darüber hinaus ist durch die seitlich ein- und ausfahrenden Platten die Arbeitsplatzsicherheit nicht zufriedenstellend.

Durch EP 1 724 219 B1 ist ein Palettierkopf bekannt, der eine Be- und Entladeöffnung an seiner Unterseite aufweist, die vermittels einer Jalousie eines Jalousieverschlusses verschließbar ist. Der Palettierkopf umfasst darüber hinaus eine vom Palettierkopf aufzunehmende Artikel umgreifende Greifeinrichtung, mit der die zunächst auf einer Lagerfläche bereitgestellten Artikel greift und anschließend die Artikel von der Lagerfläche zieht, wobei sich zeitgleich mit dem Wegziehen der Artikel von der Lagerfläche die Jalousie unter den Artikeln schließt. Während der Palettierkopf von dessen Beladeposition in eine Entladeposition verfährt werden die Artikel von der Jalousie getragen. Die Jalousie besteht aus als Rollen wirkenden, drehbar an beidseits der Be- und Entladeöffnung angeordneten Führungseinrichtungen gelagerten Rundstäben.

Durch WO 2006/000847 A2 ist ein Palettierkopf bekannt, bei dem eine Be- und Entladeöffnung durch einen oder zwei Jalousien eines Jalousieverschlusses verschließbar ist. Kommen zwei Jalousien zum Einsatz sind diese gegenläufig, wobei sie in der Schließstellung in der Mitte der Entladeöffnung aneinander anstoßenden. Der eine oder die zwei Jalousien sind aus beidseitig der Be- und Entladeöffnung in Führungsschienen drehbar gelagerten Rundstäben gebildet, die im Bereich der Führungsschienen mittels Paaren von in Bewegungsrichtung der Jalousie abwechselnd versetzt zueinander angeordneten Kettengliedern gelenkig miteinander verbunden sind. Die abwechselnd versetzt zueinander angeordneten und mit jeweils einem Paar Rundstäben gelenkig verbundenen Kettenglieder bilden so eine einer Führungsschiene zugeordnete Führungskette. Gemeinsam bilden die auf einer Seite der Be- und Entladeöffnung angeordnete Führungskette und die Führungsschiene eine Führungseinrichtung. In Bewegungsrichtung von der Offenstellung in die Schließstellung gesehen ist die Vorderkante der einen oder der zwei Jalousien durch einen Profilstab gebildet, dessen Unterseite in einem Querschnitt parallel zu den Führungsschienen verläuft und dessen Oberseite von der den Rundstäben zugewandter Hinterseite zur die Vorderkante der Jalousie bildenden Vorderseite vom Durchmesser der Rundstäbe abnehmend spitz zulaufend angeschrägt ist, um unter Artikel unterfahren zu können.

Durch DE 297 21 203 U1 ist ein Palettierkopf bekannt, der anstelle einer vermittels eines Jalousieverschlusses verschließbaren Be- und Entladeöffnung an dessen Unterseite eine an einer Stirnseite angeordnete, immer offene Be- und Entladeöffnung aufweist. Zum Entladen dieses Palettierkopfs wird nicht eine Jalousie oder ein Tragboden unter Artikeln weggezogen, sondern statt dessen streift eine Abstreifleiste die Artikel synchron mit einer Seitwärtsbewegung des Palettierkopfs von einem die Unterseite des Palettierkopfs bildenden Tragboden ab.

Durch US 4,055,257 ist eine Vorrichtung zum Stapeln von Kartonbogen-Gebinden zu Stapeln aus mehreren aufeinander liegenden, jeweils durch ein Kartonbogen-Gebinde gebildeten Stapellagen bekannt. Die Vorrichtung umfasst eine Zufuhrtransporteinrichtung für die Kartonbogen-Gebinde, eine Abführtransporteinrichtung, auf welcher der Stapel aufgebaut und wenn dieser die gewünschte Höhe erreicht hat, abtransportiert wird, sowie eine Stapeleinrichtung, welche die Kartonbogen-Gebinde von der Zufuhrtransporteinrichtung übernimmt und auf den Stapel ablegt. Die Stapeleinrichtung besteht aus zwei beidseits des Stapels angeordnete Führungseinrichtungen. Jede der Führungseinrichtungen ist durch eine Führungskette gebildet. Jede der Führungsketten verläuft in einer von zwei beidseitig des aufzustapelnden Stapels parallel zueinander verlaufenden Ebenen. Zwischen den Führungsketten sind zwei oder mehrere, durch einzelne, an ihren Enden jeweils drehbar an den Führungsketten gelagerte Rundstäbe gebildete Jalousien angeordnet, die mit den Führungsketten endlos umlaufen. Entlang der durch die endlos umlaufenden Führungsketten vorgegebenen Führungsbahn gesehen sind die Jalousien mindestens um die Abmessung einer Stapellage voneinander beabstandet an den Führungsketten angeordnet. Die Führungsbahn weist einen Grundabschnitt auf, der im Wesentlichen L-förmig ist, wobei ein Schenkel parallel zu den Zu- und Abführtransporteinrichtungen und der zweite Schenkel von der Zufuhrtransporteinrichtung gesehen hinter dem Stapel senkrecht zum anderen Schenkel verläuft. In einem die offenen Schenkel des L-förmigen Grundabschnitts miteinander verbindenden Übergabeabschnitt sind die beiden Führungsketten jeweils über drei Zahnräder geführt, von denen ein erstes in seiner vertikalen Position unverstellbar ist und ein in Umlaufrichtung der Führungsketten gesehen hierauf folgendes zweites und ein drittes gemeinsam vertikal verstellbar sind. Das Niveau des ersten Zahnrads ist dabei an das obere Niveau der Zufuhrtransporteinrichtung angepasst. Die Zahnräder unterteilen den Übergabeabschnitt in zwei horizontale und zwei vertikale Partien, die jeweils abwechselnd aufeinander folgen. Hierdurch ist kein Längenausgleich der Führungsketten erforderlich, wenn bei zunehmender Stapelhöhe das zweite und das dritte Zahnrad gemeinsam vertikal verstellt werden. An der Position des aufzustapelnden Stapels befindet sich eine gemeinsam mit dem zweiten und dem dritten Zahnrad vertikal verstellbare Abstreifleiste, welche von den Jalousien transportierte, zuvor von der Zufuhrtransporteinrichtung übernommene Kartonbogen-Gebinde abstreift und dadurch als oberste Stapellage auf den Stapel auflegt. Ein Kartonbogen-Gebinde wird dabei zunächst von der Zufuhrtransporteinrichtung auf eine Jalousie befördert, wenn sich diese in einer ersten horizontalen Partie des Übergabeabschnitts vor dem ersten Zahnrad befindet. Zwischen dem ersten und dem zweiten Zahnrad liegt eine erste vertikale Partie, welche den Höhenunterschied zwischen dem Niveau der Zufuhrtransporteinrichtung und dem Niveau der zuletzt zuoberst auf dem Stapel abgelegten Stapellage überwindet. Hieran schließt sich eine zweite horizontale Partie an, an deren Ende sich die Abstreifleiste befindet. Den verbleibenden Höhenunterschied zwischen dem oberen Ende des vertikalen Schenkels des Grundabschnitts und der zweiten horizontalen Partie überbrückt eine zweite vertikale Partie. Zwischen der zweiten horizontalen Partie und der zweiten vertikalen Partie befindet sich dabei das dritte Zahnrad. Nachteilig hieran ist, dass aufgrund der von den Jalousien in vertikaler Ausrichtung zu überbrückenden Höhenunterschiede keine anderen Artikel aufgestapelt werden können, als Kartonbogen-Gebinde. Darüber hinaus benötigt die Vorrichtung eine Abführtransporteinrichtung, was deren Aufbau erschwert und eine erneute Übergabe der fertigen Stapel notwendig macht.

Durch EP 0 195 241 A2 ist ein Palettierkopf mit einem Jalousieverschluss nach dem Oberbegriff des Anspruchs 1 bekannt, bestehend aus einzelnen Lamellen, die mit ihren gegenüberliegenden Enden jeweils an einem Kettenglied einer von zwei gegenüberliegend angeordneten Gliederketten befestigt sind. In Bezug auf die Umlenkung der Ketten um Umlenkrollen sind die Lamellen außen auf den Kettengliedern befestigt. Die Lamellen sind mit Nuten und Federn ausgeführt, die bei der Umlenkung um eine Umlenkrolle auseinander gezogen werden, so dass bei der Umlenkung keine unmittelbare Verbindung der Lamellen untereinander besteht. Entlang eines Abschnitts zwischen zwei Umlenkrollen greifen Nuten und Federn benachbarter Lamellen ineinander.

Der Erfindung liegt die Aufgabe zu Grunde, einen Palettier- oder Jalousiekopf mit einem Jalousieverschluss zu entwickeln, welche die genannten Anforderungen an Palettier- und Jalousieköpfe vollständig erfüllt und die genannten Nachteile und Einschränkungen des Standes der Technik behebt oder zumindest frei von diesen Nachteilen und Einschränkungen ist.

Die Aufgabe wird gelöst durch die Merkmale des unabhängigen Anspruchs 1.

Weitere vorteilhafte Ausgestaltungen werden durch die Unteransprüche beschrieben.

Die Erfindung betrifft demnach einen Palettier- oder Jalousiekopf mit einem Jalousieverschluss mit mindestens einem Paar einander gegenüberliegend voneinander beabstandet angeordneten Führungseinrichtungen sowie mindestens einer entlang einer durch die Führungseinrichtungen vorgegebene Führungsbahn beweglichen Jalousie bestehend aus mehreren mit ihren Enden bzw. im Bereich Ihrer Enden jeweils an einer der beiden
gegenüberliegend voneinander beabstandet angeordneten Führungseinrichtungen eines Paars Führungseinrichtungen angeordneten Lamellen.

Die Lamellen sind durch die Führungseinrichtungen in Richtung der Führungsbahn gelenkig miteinander verbunden.

Der Jalousieverschluss zeichnet sich dadurch aus, dass die Lamellen zusätzlich an mindestens einer Stelle zwischen ihren mit den Führungseinrichtungen verbundenen Enden gelenkig miteinander verbunden sind.

Durch eine zwischen den Befestigungen bzw. Lagerungen der Lamellen an bzw. im Bereich deren Enden an den gegenüberliegend voneinander beabstandet angeordneten Führungseinrichtungen vorgesehene gelenkige Verbindung der Lamellen untereinander wird eine gegenseitige Stützung und Versteifung erhalten.

Bei den Lamellen handelt es sich um beispielsweise plattenartige oder als Hohlprofile ausgestaltete Profilstäbe, die vermittels einer an ihren jeweils einer benachbarten Lamelle zugewandten Schmalseite angeordneten Verzahnung ineinandergreifen.

Vorteile dieser Ausführung einer Jalousie eines Jalousieverschlusses gegenüber dem Stand der Technik sind eine höhere Stabilität, durch die gegenseitige Stützung von durch Artikel belasteter und unbelasteter Lamellen ein erhöhtes Widerstandsmoment gegen Durchbiegung einhergehend mit einer größeren möglichen Spannweite und damit breiteren Be- und Entladeöffnungen, eine geringere Geräuschentwicklung sowie je nach Ausgestaltung eine Verringerung oder gar ein Entfall von störenden Übergängen zwischen den Lamellen. So bestehen die Vorteile untereinander verzahnter, gelenkig verbundener Lamellen bzw. Jalousieelemente darin, dass es keine Übergänge, sowohl hinsichtlich des beim Stand der Technik vorhandenen Abstands zwischen benachbarten Lamellen, als auch hinsichtlich unterschiedlicher Durchbiegungen benachbarter, belasteter und unbelasteter Lamellen zwischen den einzelnen Lamellen der Jalousie des Jalousieverschlusses mehr gibt und somit Artikel nicht mehr hängen bleiben können. Die Betriebssicherheit bei hohen Geschwindigkeiten ist damit im Vergleich zum Stand der Technik höher, bei dem die Lamellen zwischen den Führungseinrichtungen nicht miteinander verbunden sind. Dadurch kann auch mit sehr kritischen Artikeln, wie etwa schweren Gebinden, beispielsweise Getränkekisten, umgegangen werden, was beim Stand der Technik bislang nicht möglich ist. Die verringerte Geräuschentwicklung einhergehend mit der Erfüllung hoher Arbeitsplatzsicherheitsbedürfnisse ist unter anderem dadurch bedingt, dass die einzelnen Lamellen zwischen ihren Enden beim Bewegen der Jalousie im Falle einer gegenseitigen Verzahnung nicht mehr aneinander schlagen können oder im Falle einer oder mehrerer über die Länge der einzelnen Lamellen voneinander beabstandeter gelenkiger Verbindungen untereinander dies nur noch mit im Vergleich zum Stand der Technik verringerter freier Länge und damit geringerer Schallenergie zu tun in der Lage sind.

Die Verzahnung kann mit verschiedenen Zahnformen ausgeführt werden. So kann die Verzahnung beispielsweise in der Draufsicht rechteckig oder dreieckig spitz zulaufend ausgeführt sein.

Die ineinandergreifenden Zähne zweier benachbarter Lamellen sind erfindungsgemäß durch eine durchgängige Gelenkachse gelenkig miteinander verbunden.

Alternativ sind die ineinandergreifenden Zähne zweier benachbarter Lamellen erfindungsgemäß durch jeweils nur zwischen einem oder mehreren Paaren ineinandergreifender Zähne wirkende Gelenkachsenabschnitte gelenkig miteinander verbunden.

Zumindest in eine Oberfläche der Profilstäbe können zur Verringerung von Reibungskräften zwischen Artikeln und den eine Jalousie bildenden Lamellen Lagermittel, wie beispielsweise um zumindest parallel zur Erstreckung der Lamellen verlaufende Achsen drehbare Rollen und/oder Kugeln eingearbeitet sein.

Beispielsweise können die Lamellen zwischen ihren mit den Führungselementen verbundenen Enden zusätzlich durch Kettenglieder jeweils paarweise gelenkig miteinander verbunden sein.

Die Führungseinrichtungen können jeweils eine Führungskette umfassen, an zumindest einem Teil deren Gelenkverbindungen jeweils eine von mehreren gemeinsam eine Jalousie des Jalousieverschlusses bildenden Lamellen mit einem ihrer Enden unverdrehbar befestigt oder drehbar gelagert sein kann.

Die Führungseinrichtungen können darüber hinaus mehrere Zahnräder oder Rollen umfassen, über welche die Führungskette jeweils umgelenkt und entlang der Führungsbahn geführt ist.

Alternativ oder zusätzlich können die Führungseinrichtungen jeweils eine entlang der Führungsbahn verlaufende Führungsschiene umfassen, in welcher vorzugsweise jeweils mindestens eine Führungskette verläuft.

Eine weitere Ausgestaltungsform der Erfindung betrifft einen Palettier- oder Jalousiekopf mit einem zuvor beschriebenen Jalousieverschluss. Der Palettier- oder Jalousiekopf umfasst einen von einer Oberseite, einer Unterseite sowie die Ober- und die Unterseite miteinander verbindenden, gegenüberliegenden Schmal- und Stirnseiten umgebenen Aufnahmeraum für einen oder mehrere Artikel. Wenigstens die Unterseite weist eine Öffnung auf. Zumindest die Öffnung an der Unterseite ist vermittels der mindestens einen Jalousie des Jalousieverschlusses verschließbar. Führungselemente des Jalousieverschlusses sind beidseits der Öffnung einander gegenüberliegend angeordnet. Vorzugsweise an der Oberseite des Palettier- oder Jalousiekopfs greift eine Verbringungsvorrichtung, bevorzugt ein mehrachsiger Roboterarm an. Ein oder mehrere in den Aufnahmeraum eingebrachte Artikel werden während des Umgangs mit diesen in der Schließstellung der mindestens einen Jalousie von dieser getragen. Durch ein Wegziehen der mindestens einen Jalousie unter dem mindestens einen in den Aufnahmeraum eingebrachten Artikel wird der Palettier- oder Jalousiekopf entladen.

Der Palettier- oder Jalousiekopf kann darüber hinaus alle oder einen Teil der Merkmale der eingangs beschriebenen Palettier- und Jalousieköpfen aufweisen.

Bevorzugt ist eine Ausführung als Jalousiekopf mit den eingangs beschriebenen Merkmalen eines Jalousiekopfs vorgesehen.

Wichtig ist hervorzuheben, dass eine gegebenenfalls vorgesehene Betätigungsvorrichtung für den Jalousieverschluss wahlweise Bestandteil des Palettier- oder Jalousiekopfs oder des Jalousieverschlusses sein kann. Alternativ kann das Öffnen und Schließen der einen oder der zwei Jalousien des Jalousieverschlusses vermittels der Verbringungsvorrichtung betätigt sein.

Vorteile gegenüber dem Stand der Technik sind unter Anderem eine wesentlich verringerte Geräuschentwicklung beim Öffnen und Schließen der einen oder der zwei Jalousien des Jalousieverschlusses einhergehend mit einer verringerten Lärmentwicklung am Aufstellungsort und damit der Erfüllung steigender Arbeitsplatzsicherheitsbedürfnisse.

Weitere Vorteile gegenüber dem Stand der Technik sind eine größere mögliche Spannweite der Jalousie einhergehend mit einer größeren maximalen Breite der Be- und Entladeöffnungen von Palettier- und Jalousieköpfen.

Zusätzliche Vorteile gegenüber dem Stand der Technik sind eine höhere Belastbarkeit der in den Aufnahmeraum eingebrachte Artikel tragenden einen oder zwei Jalousien sowie eine Steigerung der Betriebssicherheit durch eine deutliche Verringerung der Gefahr eines Verhakens sowie dadurch verursacht gegebenenfalls Umfallens von Artikeln, wodurch die Gefahr einer Beschädigung sowohl von Artikeln, als auch der Lamellen der einen oder der zwei Jalousien des Jalousieverschlusses verringert wird, einhergehend mit einer verringerten Verletzungsgefahr für in der Nähe befindliches Bedienpersonal.

Im Folgenden sollen Ausführungsbeispiele die Erfindung und ihre Vorteile anhand der beigefügten Figuren näher erläutern. Darin bezeichnen gleiche Bezugszeichen gleiche oder gleich wirkende Elemente. Ferner werden der Übersicht halber nur Bezugszeichen in den einzelnen Figuren dargestellt, die für die Beschreibung der jeweiligen Figur erforderlich sind. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Figur 1: einen Teil einer aus durch als Rollen wirkende, an ihren Enden an jeweils einer Führungseinrichtung drehbar gelagerte Rundstäbe gebildete Lamellen bestehenden Jalousie eines Jalousieverschlusses nach dem Stand der Technik in einer Seitenansicht entlang der parallel zueinander angeordneten Lamellen gesehen,
- Figur 2: einen Teil einer aus durch an ihren Enden an jeweils einer Führungseinrichtung befestigte Profilstäbe gebildete Lamellen bestehenden Jalousie eines Jalousieverschlusses nach dem Stand der Technik in einer Seitenansicht entlang der parallel zueinander angeordneten Lamellen gesehen.
- Figur 3: einen Teil einer aus durch an ihren Enden an jeweils einer Führungseinrichtung befestigte und dazwischen untereinander gelenkig miteinander verzahnte Profilstäbe gebildete Lamellen bestehenden Jalousie eines Jalousieverschlusses nach der Erfindung in einer Seitenansicht entlang der parallel zueinander angeordneten Lamellen gesehen.
- Figur 4: einen Teil einer aus durch an ihren Enden an jeweils einer Führungseinrichtung befestigte und dazwischen untereinander gelenkig miteinander verzahnte Profilstäbe gebildete Lamellen bestehenden Jalousie eines Jalousieverschlusses nach der Erfindung in einer Draufsicht.
- Figur 5: ein erstes Ausführungsbeispiel eines einen Jalousieverschluss umfassenden, als Jalousiekopf ausgeführten Paletierkopfs in einer perspektivischen Ansicht.
- Figur 6: ein zweites Ausführungsbeispiel eines einen Jalousieverschluss umfassenden, als Jalousiekopf ausgeführten Paletierkopfs in einer perspektivischen Ansicht.
- Figur 7: ein drittes Ausführungsbeispiel eines einen Jalousieverschluss umfassenden, als Jalousiekopf ausgeführten und an einer Verbringungsvorrichtung angeordneten Paletierkopfs in einer perspektivischen Ansicht.

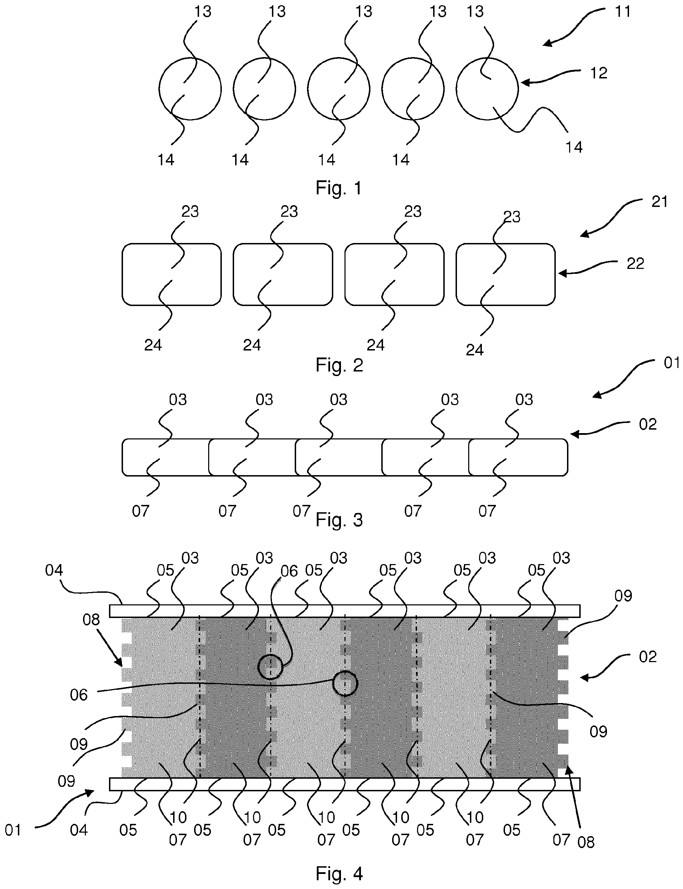

Die dargestellten Ausführungsformen stellen lediglich Beispiele dar, wie ein erfindungsgemäßer Palettier- oder Jalousiekopf mit einem Jalousieverschluss ausgestaltet sein kann und stellen keine abschließende Begrenzung dar. Der begrenzte Schutzumfang wird durch die Ansprüche definiert. Ein in den Figuren 1 und 2 ganz oder in Teilen dargestellter Jalousieverschluss 21 nach dem Stand der Technik weist eine oder zwei Jalousien 12, 22 auf, die jeweils aus mehreren, mit ihren Enden beidseits an gegenüberliegenden Führungseinrichtungen des Jalousieverschlusses 11, 21 befestigten, parallel zueinander angeordneten Lamellen 13, 23 bestehen. Zwischen den Führungseinrichtungen besteht keine Verbindung der Lamellen 13, 23 untereinander.

Figur 1 zeigt hierbei einen Jalousieverschluss 11, dessen Jalousie 12 durch sich senkrecht zur Zeichnungsebene erstreckende Lamellen 13 gebildet sind, die in Form von als Rollen wirkenden Rundstäben 14 ausgebildet sind. Die Rundstäbe 14 sind mit ihren Enden an den Führungseinrichtungen des Jalousieverschlusses 11 befestigt. Zur Verringerung der Reibung zwischen Artikeln und Jalousie können die Rundstäbe 14 mit ihren Enden an den Führungseinrichtungen des Jalousieverschlusses 11 drehbar gelagert sein. Zwischen den Führungseinrichtungen besteht keine Verbindung der Rundstäbe 14 untereinander.

Figur 2 zeigt einen Jalousieverschluss 21, dessen Jalousie 22 durch sich senkrecht zur Zeichnungsebene verlaufende Lamellen 23 gebildet sind, die, um im Vergleich zur Verwendung von Rundstäben als Lamellen ein höheres Widerstandsmoment gegen Durchbiegung zu erhalten, in Form von Profilstäben 24 ausgebildet sind. Die Profilstäbe 24 sind mit ihren Enden an den Führungseinrichtungen des Jalousieverschlusses 21 befestigt. Zwischen den Führungseinrichtungen besteht keine Verbindung der Profilstäbe 24 untereinander.

Der Abstand zwischen den einzelnen als Rollen wirkenden Rundstäben 14 oder der ein höheres Flächenträgheitsmoment und damit ein höheres Widerstandsmoment gegen Durchbiegung aufweisenden Profilstäbe 24 verursacht sowohl beim Wegziehen der Jalousie 12, 22 eines Jalousieverschlusses 11, 21 unter in einen Aufnahmeraum eines Palettier- oder Jalousiekopfs eingebrachte Artikel, als auch beim Unterfahren von Artikeln mit der Jalousie 12, 22 eines Jalousieverschlusses 11, 21 während des Beladens eines Palettierkopfs, als auch beim Einschieben von Artikeln über die Jalousie 12, 22 eines Jalousieverschlusses 11,21 in einen Jalousiekopf immer wieder Probleme. Ein Problem ist dass Artikel an den Übergängen zwischen den Rundstäben 14 oder zwischen den Profilstäben 24 verhaken und umfallen oder den Jalousieverschluss beschädigen. Ein weiteres Problem besteht darin, dass sich die einzelnen Rundstäbe 14 oder Profilstäbe 24 bei einer Belastung in der Mitte durchbiegen und so die Übergänge zwischen belasteten und unbelasteten benachbarten Lamellen 13, 23 noch weiter verschlechtern. Ein drittes Problem ist die enorme Geräuschentwicklung beim Öffnen oder Schließen der Jalousie 12, 22 des Jalousieverschlusses 11, 21, wobei die Lamellen 13, 23 der Jalousie 12, 22 aneinander schlagen.

Ein in Figur 3 und in Figur 4 ganz oder in Teilen dargestellter erfindungsgemäßer Jalousieverschluss 01 behebt diese Einschränkungen und Nachteile des Standes der Technik vollständig, indem die parallel zueinander angeordneten Lamellen 03 auch zwischen ihren Enden außerhalb des Bereichs der gegenüberliegenden Führungseinrichtungen 04 gelenkig miteinander verbunden sind.

Figur 3 zeigt hierbei einen Jalousieverschluss 01 mit mindestens einem nicht näher dargestellten Paar einander gegenüberliegend voneinander beabstandet angeordneten Führungseinrichtungen 04 sowie mindestens einer entlang einer durch die Führungseinrichtungen 04 vorgegebene Führungsbahn beweglichen Jalousie 02. Die Jalousie 02 besteht aus mehreren mit ihren Enden 05 bzw. im Bereich Ihrer Enden 05 jeweils an einer der beiden gegenüberliegend voneinander beabstandet angeordneten Führungseinrichtungen 04 eines Paars Führungseinrichtungen 04 angeordneten Lamellen 03. Die Lamellen 03 sind durch die Führungseinrichtungen 04 in Richtung der Führungsbahn gelenkig miteinander verbunden. Zusätzlich sind die Lamellen 03 an mindestens einer Stelle 06 zwischen ihren mit den Führungseinrichtungen 04 verbundenen Enden 05 gelenkig miteinander verbunden.

Die Achslage der gelenkigen Verbindung der Lamellen 03 in Richtung der Führungsbahn miteinander lässt sich dabei dadurch veranschaulichen, dass eine Führungseinrichtung 04 innerhalb einer Ebene verläuft. Innerhalb dieser Ebene verläuft auch die durch die Führungseinrichtung 04 beschriebene Führungsbahn. Die Lamellen 03 sind um senkrecht auf der Ebene, in der die Führungsbahn verläuft, aufstehende Achsen gelenkig miteinander verbunden.

Durch eine zwischen den Befestigungen bzw. Lagerungen der Lamellen 03 an bzw. im Bereich deren Enden 05 an den gegenüberliegend voneinander beabstandet angeordneten Führungseinrichtungen 04 vorgesehene gelenkige Verbindung der Lamellen 03 untereinander wird eine gegenseitige Stützung und Versteifung der Lamellen 03 erhalten.

Hierdurch wird eine im Vergleich zum Stand der Technik höhere Stabilität und Betriebssicherheit erhalten, weil sich die Lamellen 03 hierdurch über ihre gesamte Erstreckung zwischen den Führungseinrichtungen hinweg gegenseitig gegen Durchbiegung stützen. Bei einer Belastung biegen sich dadurch nicht nur belastete Lamellen 03 durch, sondern auch hierzu benachbarte Lamellen 03. Dadurch kommt es zu keinen Höhenunterschieden zwischen benachbarten Lamellen, an denen Artikel verhaken könnten.

Figur 4 zeigt ferner, dass es sich bei den Lamellen 03 um beispielsweise plattenartige oder als Hohlprofile ausgestaltete Profilstäbe 07 handeln kann, die vermittels einer an ihren jeweils einer benachbarten Lamelle 03 zugewandten Schmalseite angeordneten Verzahnung 08 ineinandergreifen. Eine solche Verzahnung 08 lässt beim Stand der Technik auftretende Zwischenräume zwischen benachbarten Lamellen gar nicht erst entstehen, in denen ein Verhaken von Artikeln möglich wäre.

Die Verzahnung 08 kann in der Draufsicht wie in Figur 4 dargestellt rechteckig ausgestaltet sein. Grundsätzlich sind auch andere Formen der Verzahnung 08 denkbar, beispielsweise eine dreieckig spitz zulaufende Verzahnung 08 der Lamellen 03 untereinander.

Ineinandergreifenden Zähne 09 der Verzahnung 08 zwischen benachbarten Lamellen 03 können wie in Figur 3 und in Figur 4 dargestellt durch eine in ihrer Lage jeweils durch eine strichpunktierte Linie angedeutete durchgängige Gelenkachse 10 gelenkig miteinander verbunden sein. Jede der Gelenkachsen 10 kann sich dabei zwischen den gegenüberliegenden Führungseinrichtungen 04 erstrecken. Denkbar ist auch, dass die Gelenkachsen 10 gleichzeitig der Lagerung der Lamellen 03 an den gegenüberliegenden Führungseinrichtungen 04 dienen. Alternativ ist denkbar, dass ineinandergreifende Zähne 09 der Verzahnung 08 zwischen benachbarten Lamellen 03 durch jeweils nur zwischen einem oder mehreren Paaren ineinandergreifender Zähne 09 wirkende Gelenkachsenabschnitte gelenkig miteinander verbunden sind.

Ein in den Figuren 3 und 4 dargestellter Jalousieverschluss 01 ist zur Verwendung in Verbindung mit einem eingangs beschriebenen Palettier- oder Jalousiekopf geeignet.

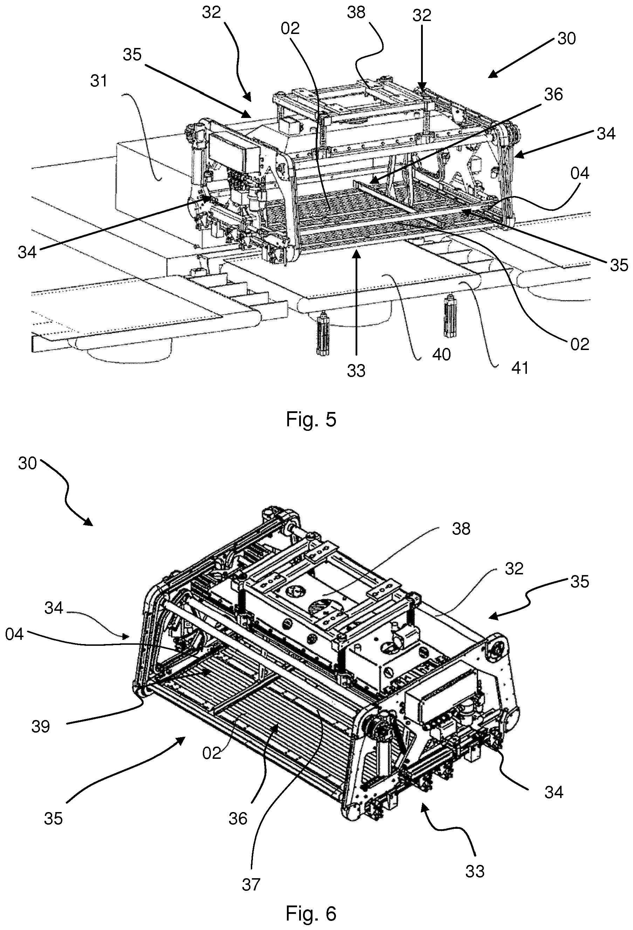

Ein in Figur 5, Figur 6 und Figur 7 ganz oder in Teilen dargestellten Jalousiekopf 30 zum Umgang mit Artikeln 31 umfasst einen von einer Oberseite 32, einer Unterseite 32 sowie die Oberseite 32 und die Unterseite 33 miteinander verbindenden, gegenüberliegenden Schmalseiten 34 und Stirnseiten 35 umgebenen Aufnahmeraum 36 für einen oder mehrere Artikel 31. Die Unterseite 33 weist eine vermittels einer oder zweier Jalousien 02 des Jalousieverschlusses 01 verschließbare Öffnung 37 auf. Die Öffnung 37 dient als Entladeöffnung des Jalousiekopfs 30. Darüber hinaus umfasst der Jalousiekopf 30 wenigstens eine an zumindest einer der Stirnseiten 35 angeordnete Beladeöffnung 39. Beidseits der Öffnung 37 sind Führungseinrichtungen 04 des Jalousieverschlusses 01 einander gegenüberliegend angeordnet. In einer Schließstellung der mindestens einen Jalousie 02, bei der die Öffnung an der Unterseite 33 geschlossen ist, werden ein oder mehrere in den Aufnahmeraum eingebrachte Artikel 31 während des Umgangs mit diesen von der mindestens einen Jalousie 02 getragen. Durch ein Wegziehen der mindestens einen Jalousie 02 unter dem mindestens einen in den Aufnahmeraum 36 eingebrachten Artikel 31 wird der Jalousiekopf 30 entladen. Beispielsweise eine vorzugsweise entweder wie in Figur 5, Figur 6 und Figur 7 dargestellt an der Oberseite 32, oder an der oder an wenigstens einer der beiden Schmalseiten 34 angeordnete Kupplungsvorrichtung 38 dient der vorzugsweise lösbaren Verbindung mit einer Verbringungsvorrichtung 42, beispielsweise mindestens einem an einem horizontalen Querträger verfahrbaren Schlitten oder einem Hubwerk oder einem mehrachsig beweglicher Roboterarm, um nur einige denkbare Ausgestaltungen zu nennen. Grundsätzlich sind auch andere Verbindungen zwischen Jalousiekopf 30 und Verbringungsvorrichtung denkbar.

Figur 5 zeigt dabei eine gleichzeitige Zuführung von unter dem oder den im Aufnahmeraum transportierten Artikeln 31 beispielsweise beim Aufstapeln auf einen Stapel an einem Stapelplatz zu platzierende Zwischenlagen 40, die vermittels einer gesonderten Transporteinrichtung 41 unter den Jalousiekopf 30 zugeführt werden. An der Unterseite 33 des Jalousiekopfs 30 und/oder an der Unterseite der einen oder der beiden Jalousien 02 können beispielsweise Sauggreifer angeordnet sein, welche die Zwischenlage 40 ansaugen, so dass diese dann vom Jalousiekopf 30 mit zum Stapelplatz transportiert und gleichzeitig mit oder vor dem Entladen des Jalousiekopfs 30 unter dem oder den im Aufnahmeraum transportierten Artikeln 31 auf den Stapel aufgelegt wird.

Figur 6 zeigt dabei einen Jalousiekopf 30 dessen als Entladeöffnung vorgesehene Öffnung 37 an der Unterseite 33 momentan von einer oder zwei gegenläufigen Jalousien 02 einen Jalousieverschlusses 01 geschlossen ist. Der Jalousiekopf 30 ist dadurch bereit, durch die an einer seiner Stirnseiten 35 vorgesehene Beladeöffnung 39 beladen zu werden.

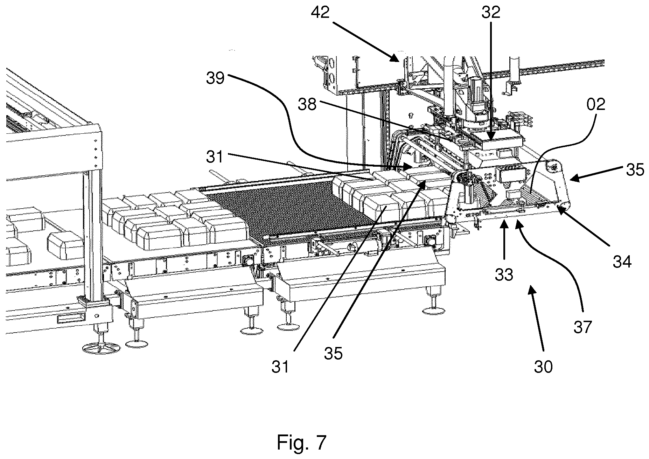

Figur 7 zeigt, wie ein Jalousiekopf 30, dessen als Entladeöffnung vorgesehene Öffnung 37 an der Unterseite 33 momentan von einer oder zwei gegenläufigen Jalousien 02 einen Jalousieverschlusses 01 geschlossen ist, durch die an einer seiner Stirnseiten 35 vorgesehene Beladeöffnung 39 beladen wird. Dabei werden Artikel 31 durch die Beladeöffnung hindurch auf die Jalousie 02 in den Aufnahmeraum 36 geschoben. Die Jalousie 02 trägt dabei die Artikel 31 bis zum Entladen des Jalousiekopfs, bei dem die Jalousie 02 dann unter den im Aufnahmeraum 36 befindlichen Artikeln weggezogen wird.

Wichtig ist hervorzuheben, dass die zwischen den Befestigungen bzw. Lagerungen der Lamellen an bzw. im Bereich deren Enden an den gegenüberliegend voneinander beabstandet angeordneten Führungseinrichtungen vorgesehene zusätzliche gelenkige Verbindung als doppelt gelenkige Verbindung und/oder rückensteif ausgeführt sein kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Die Erfindung ist beispielsweise bei der Herstellung und dem Betrieb von Anlagen zum Umgang mit Artikeln gewerblich anwendbar.

### Bezugszeichenliste

- 01: Jalousieverschluss
- 02: Jalousie
- 03: Lamelle
- 04: Führungseinrichtung
- 05: Ende
- 06: Stelle
- 07: Profilstab
- 08: Verzahnung
- 09: Zahn
- 10: Gelenkachse
- 11: Jalousieverschluss
- 12: Jalousie
- 13: Lamelle
- 14: Rundstab
- 21: Jalousieverschluss
- 22: Jalousie
- 23: Lamelle
- 24: Profilstab
- 30: Jalousiekopf
- 31: Artikel
- 32: Oberseite
- 33: Unterseite
- 34: Schmalseite
- 35: Stirnseite
- 36: Aufnahmeraum
- 37: vermittels Jalousie 02 verschließbare Öffnung an der Unterseite 33
- 38: Kupplungsvorrichtung
- 39: Beladeöffnung
- 40: Zwischenlage
- 41: Transporteinrichtung
- 42: Verbringungsvorrichtung

## Patentansprüche

1. Palettier- oder Jalousiekopf mit einem Jalousieverschluss (01) mit mindestens einem Paar einander gegenüberliegend voneinander beabstandet angeordneter Führungseinrichtungen (04) sowie mindestens einer entlang einer durch die Führungseinrichtungen (04) vorgegebenen Führungsbahn beweglichen Jalousie (02), bestehend aus mehreren im Bereich ihrer Enden (05) jeweils an einer der beiden gegenüberliegend voneinander beabstandet angeordneten Führungseinrichtungen (04) eines Paars Führungseinrichtungen (04) angeordneten Lamellen (03), welche durch die Führungseinrichtungen (04) in Richtung der Führungsbahn gelenkig miteinander verbunden sind, **dadurch gekennzeichnet, dass** die Lamellen (03) zusätzlich an mindestens einer Stelle (06) zwischen ihren mit den Führungseinrichtungen (04) verbundenen Enden (05) durch eine Gelenkachse (10) gelenkig miteinander verbunden sind und wobei es sich bei den Lamellen (03) um Profilstäbe (07) handelt, die vermittels einer an ihren jeweils einer benachbarten Lamelle (03) zugewandten Schmalseite angeordneten Verzahnung (08) ineinandergreifen, wobei ineinandergreifende Zähne (09) der Verzahnung (08) zwischen benachbarten Lamellen (03) durch eine durchgängige Gelenkachse (10) gelenkig miteinander verbunden sind oder wobei ineinandergreifende Zähne (09) der Verzahnung (08) zwischen benachbarten Lamellen (03) durch jeweils nur zwischen einem oder mehreren Paaren ineinandergreifender Zähne (09) wirkende Gelenkachsenabschnitte gelenkig miteinander verbunden sind, wobei die Gelenkachse (10) oder Gelenkachsenabschnitte als Lagerung der Lamellen (03) an den gegenüberliegenden Führungseinrichtungen (04) dienen.

2. Palettier- oder Jalousiekopf mit einem Jalousieverschluss (01) nach Anspruch 1, **gekennzeichnet durch** eine in einer Draufsicht auf eine Jalousie (02) rechteckig oder dreieckig spitz zulaufende Verzahnung (08).

3. Palettier- oder Jalousiekopf mit einem Jalousieverschluss (01) nach Anspruch 1 oder 2, **gekennzeichnet durch** zumindest in eine beim Umgang mit Artikeln diesen zugewandte Oberfläche der Profilstäbe (07) eingearbeitete Lagermittel.

4. Palettier- oder Jalousiekopf mit einem Jalousieverschluss (01) nach Anspruch 3, **gekennzeichnet durch** um zumindest parallel zur Erstreckung der Lamellen (03) verlaufende Achsen drehbare Rollen und/oder Kugeln als Lagermittel.

5. Palettier- oder Jalousiekopf mit einem Jalousieverschluss (01) nach einem der vorhergehenden Ansprüche, **dadurch gekennzeichnet, dass** die Lamellen zwischen ihren mit den Führungseinrichtungen (04) verbundenen Enden (05) zusätzlich durch Kettenglieder jeweils paarweise gelenkig miteinander verbunden sind.

6. Palettier- oder Jalousiekopf mit einem Jalousieverschluss (01) nach einem der vorhergehenden Ansprüche, zum Umgang mit Artikeln, umfassend einen von einer Oberseite, einer Unterseite sowie die Ober- und die Unterseite miteinander verbindenden, gegenüberliegenden Schmal- und Stirnseiten umgebenen Aufnahmeraum für einen oder mehrere Artikel, wobei die Unterseite eine vermittels einer oder zweier Jalousien (02) des Jalousieverschlusses (01) verschließbare Öffnung aufweist, beidseits welcher Öffnung Führungseinrichtungen (04) des Jalousieverschlusses (01) einander gegenüberliegend angeordnet sind, wobei in einer Schließstellung der mindestens einen Jalousie (02), bei der die Öffnung an der Unterseite geschlossen ist, ein oder mehrere in den Aufnahmeraum eingebrachte Artikel während des Umgangs mit diesen von der mindestens einen Jalousie (02) getragen werden und durch ein Wegziehen der mindestens einen Jalousie (02) unter dem mindestens einen in den Aufnahmeraum eingebrachten Artikel der Palettier- oder Jalousiekopf entladen wird.

## Claims

1. A palletising head or shutter head with a shutter lock (01) with at least one pair of guiding devices (04) arranged to be located opposite each other and spaced apart from one another, as well as at least one shutter (02) that is movable along a guide path defined by the guiding devices (04), consisting of a plurality of blades (03) that are arranged in the area of their ends (05) in each case at one of the two guiding devices (04) of a pair of guiding devices (04) arranged to be located opposite each other and spaced apart from one another, which blades (03) are articulatedly connected to each other in the direction of the guide path by the guiding devices (04), **characterised in that** the blades (03) are additionally articulatedly connected to each other by a joint axis (10) in at least one location (06) between the ends (05) of the blades (05), which ends (05) are connected to the guiding devices (04), and wherein the blades (03) are profile bars (07) interlocking by means of a tooth system (08) arranged at their narrow sides, which in each case face toward an adjacent blade (03), wherein interlocking teeth (09) of the tooth system (08) between adjacent blades (03) are articulatedly connected to each other by a continuous joint axis (10), or wherein interlocking teeth (09) of the tooth system (08) between adjacent blades (03) are articulatedly connected to each other by joint axis sections acting in each case only between one or more pairs of interlocking teeth (09), wherein the joint axis (10) or the joint axis sections serve as a bearing for the blades (03) at the guiding devices (04) located opposite each other.

2. The palletising head or shutter head with a shutter lock (01) as recited in claim 1, **characterised by** a rectangularly formed or triangularly tapering tooth system (08), as seen from a top view of a shutter (02).

3. The palletising head or shutter head with a shutter lock (01) as recited in claim 1 or 2, **characterised by** bearing means incorporated into at least one surface of the profile bars (07), which surface faces towards articles while these are being handled.

4. The palletising head or shutter head with a shutter lock (01) as recited in claim 3, **characterised by** rolls and/or balls as bearing means that are rotatable about axes running at least parallel to the extension of the blades (03).

5. The palletising head or shutter head with a shutter lock (01) as recited in one of the previous claims, **characterised in that** the blades are additionally articulatedly connected to each other, in each case in pairs, by chain links between the ends (05) of the blades (03), which ends (05) are connected to the guiding devices (04).

6. The palletising head or shutter head with a shutter lock (01) as recited in one of the previous claims, for handling articles, comprising a receiving space for one or more articles, which receiving space is encompassed by an upper side, a lower side, as well as narrow sides and face sides located opposite to each other and connecting the upper side and the lower side with each other, wherein the underside has an opening that is closeable by means of one or two shutters (02) of the shutter lock (01), on both sides of which opening guiding devices (04) of the shutter lock (01) are arranged to be located opposite each other, wherein, in a locking position of the at least one shutter (02) in which position the opening at the lower side is closed, one or more articles that have been introduced into the receiving space are supported by the at least one shutter (02) while they are being handled, and the palletising head or shutter head is unloaded by pulling away the at least one shutter (02) under the at least one article that has been introduced into the receiving space.

## Revendications

1. Tête de palettisation ou à jalousie comprenant une fermeture à jalousie (01) ayant au moins une paire de dispositifs de guidage (04) disposés en regard et espacés l'un de l'autre ainsi qu'au moins une jalousie (02) déplaçable le long d'une glissière définie par les dispositifs de guidage (04), se composant d'une pluralité de lamelles (03) lesquelles sont disposées, au niveau de leurs extrémités (05), respectivement sur l'un des deux dispositifs de guidage (04) d'une paire de dispositifs de guidage (04), disposés en regard et espacés l'un de l'autre, et lesquelles sont reliées entre elles de manière articulée par les dispositifs de guidage (04) en direction de ladite glissière, **caractérisée par le fait que**, en sus, les lamelles (03) sont reliées entre elles de manière articulée par un axe d'articulation (10) sur au moins un point (06) situé entre leurs extrémités (05) reliées aux dispositifs de guidage (04), et dans laquelle lesdites lamelles (03) sont des barres profilées (07) qui s'engrènent les unes dans les autres par l'intermédiaire d'une denture (08) disposée sur leur petit côté montrant respectivement vers une lamelle (03) voisine, dans laquelle des dents (09) en prise de la denture (08) entre des lamelles (03) voisines sont reliées entre elles de manière articulée par un axe continu d'articulation (10), ou dans laquelle des dents (09) en prise de la denture (08) entre des lamelles (03) voisines sont reliées entre elles de manière articulée par des sections d'axe d'articulation qui n'agissent respectivement qu'entre une ou plusieurs paires de dents (09) en prise, ledit axe d'articulation (10) ou lesdites sections d'axe d'articulation faisant office de support des lamelles (03) sur les dispositifs de guidage (04) opposés.

2. Tête de palettisation ou à jalousie comprenant une fermeture à jalousie (01) selon la revendication 1, **caractérisée par** une denture (08) qui, dans une vue de dessus sur une jalousie (02), est rectangulaire ou s'effile en triangle.

3. Tête de palettisation ou à jalousie comprenant une fermeture à jalousie (01) selon la revendication 1 ou 2, **caractérisée par** des moyens de support incorporés au moins dans une surface des barres profilées (07) qui, lors de la manipulation d'articles, montre vers ceux-ci.

4. Tête de palettisation ou à jalousie comprenant une fermeture à jalousie (01) selon la revendication 3, **caractérisée par** des rouleaux et/ou billes en tant que moyens de support, aptes à tourner autour d'axes s'étendant au moins parallèlement à l'extension des lamelles (03).

5. Tête de palettisation ou à jalousie comprenant une fermeture à jalousie (01) selon l'une quelconque des revendications précédentes, **caractérisée par le fait que**, en sus, entre leurs extrémités (05) reliées aux dispositifs de guidage (04), les lamelles sont reliées entre elles chacune par paires de manière articulée par l'intermédiaire de chaînons.

6. Tête de palettisation ou à jalousie comprenant une fermeture à jalousie (01) selon l'une quelconque des revendications précédentes, pour la manipulation d'articles, comprenant un espace de réception pour un ou plusieurs article(s) qui est entouré d'une face supérieure, d'une face inférieure ainsi qui de petits côtés et de faces frontales opposés qui relient entre elles lesdites faces supérieure et inférieure, dans laquelle la face inférieure présente une ouverture qui peut être fermée au moyen d'une ou de deux jalousies (02) de la fermeture à jalousie (01), de part et d'autre de ladite ouverture étant disposés en regard l'un de l'autre des dispositifs de guidage (04) de la fermeture à jalousie (01), dans une position de fermeture de ladite au moins une jalousie (02) dans laquelle l'ouverture sur la face inférieure est fermée, un ou plusieurs article(s) introduit(s) dans l'espace de réception étant supportés par ladite au moins une jalousie (02) lors de leur manipulation, et la tête de palettisation ou à jalousie étant déchargée en retirant ladite au moins une jalousie (02) sous ledit au moins un article introduit dans l'espace de réception.
